# EUROPEAN PATENT APPLICATION

(11) **EP 4 648 177 A1**
(43) Date of publication of application: **12.11.2025**
(21) Application number: 24205797.4
(22) Date of filing: 10.10.2024
(51) Int. Cl.: H01M 10/613, H01M 10/6554, H01M 10/6557, H01M 50/204

(54) **BATTERY PACK**

(30) Priority: 09.05.2024 CN 202421002529 U; 30.07.2024 WO PCT/CN2024/108482
(71) Applicant: Eve Energy Co., Ltd., Huizhou, Guangdong 516006 (CN)
(72) Inventor: DING, Xunfeng, Huizhou (CN); ZHOU, Hongquan, Huizhou (CN)
(74) Representative: Murgitroyd & Company

(57) **Abstract**

Provided is a battery pack including at least two layers of battery modules (1) and a liquid cooling assembly (2). A liquid cooling assembly (2) includes a first plate (21), a second plate (22), and a third plate (23), wherein the second plate (22) is located between the first plate (21) and the third plate (23), a first cooling flow channel (24) is formed between the first plate (21) and the second plate (22), a second cooling flow channel (25) is formed between the second plate (22) and the third plate (23), and communication or discommunication between the first cooling flow channel (24) and the second cooling flow channel (25) is formed between the second plate (22) and the third plate (23).

## Description

### TECHNICAL FIELD

The present application relates to a technical field of energy storage products, and more particularly, to a battery pack.

### BACKGROUND

In order to increase the capacity of a battery pack, a plurality of battery modules are usually arranged in the battery pack, and the plurality of battery modules may be arranged in layers to properly utilize an inner space of the battery pack. For the battery modules in the plurality of layers, a bracket is usually used to separate the battery modules, and a cold plate is disposed at the bottoms of the battery modules in each layer, but such an arrangement may increase a size of the battery pack in the thickness direction thereof, and the space utilization rate of the battery pack is lower.

In the related art, an integrated battery assembly having the battery modules disposed in two layers is disclosed. The plurality of battery modules are distributed in an upper layer and a lower layer of the two layers. A water-cooled plate assembly is disposed between the two layers of battery modules. The water-cooled plate assembly is configured to cool the upper and the lower layers of battery modules, thereby reducing the thickness of the battery pack and improving the space utilization rate of the battery pack.

### SUMMARY

However, the above-mentioned solution has the following disadvantages: each flow channel inside the water-cooled plate assembly is cooling the battery modules at the upper and lower layers respectively above and below the flow channel at the same time, and the cooling effect thereof is relatively poor. After the battery module runs for a long time, it is likely to lead to thermal runaway due to a slower cooling speed, thereby decreasing the service life of the battery pack.

Therefore, there is an urgent need for an improved battery pack to solve the above problems in the prior art.

The present application provides a battery pack including:
at least two layers of battery modules;
a liquid cooling assembly, disposed between adjacent two ones of the at least two layers of the battery modules and including a first plate, a second plate, and a third plate, wherein the second plate is located between the first plate and the third plate, a first cooling flow channel is formed between the first plate and the second plate, a second cooling flow channel is formed between the second plate and the third plate,
the first cooling flow channel and the second cooling flow channel are in or not in communication.

### BENEFICIAL EFFECT

The present application provides a battery pack including at least two layers of battery modules. A liquid cooling assembly is disposed between two adjacent layers of battery modules, and the liquid cooling assembly commonly cools two layers of battery modules adjacent with the liquid cooling assembly, so that a bracket for supporting the battery modules does not need to be disposed between the adjacent battery modules, thereby reducing the size of the battery pack in the thickness direction and improving the space utilization rate of the battery pack. A first cooling flow channel is defined between the first plate and the second plate of the liquid cooling assembly. A second cooling flow channel is defined between the second plate and the third plate. Compared with a manner in which the adjacent two layers of the battery modules are commonly cooled through one cooling flow channel therebetween, each of the first cooling flow channel and the second cooling flow channel is targeted to cool one or more battery modules in a corresponding one of the two layers adjacent with the cooling flow channel, so that the cooling effect of the plurality of layers of the battery modules may be effectively improved, and the batteries in the battery module may operate in an appropriate temperature environment, thereby preventing a risk such as the thermal runaway and the like of the battery modules due to slower cooling, and prolonging the service life of the battery pack.

### BRIEF DESCRIPTION OF THE DRAWINGS

FIG. 1 is an exploded view of a battery pack according to some embodiments of the present application.
FIG. 2 is an exploded view of a battery pack according to other some embodiments of the present application.
FIG. 3 is a cross-sectional view of a liquid cooling assembly according to some embodiments of the present application.
FIG. 4 is a partial view of FIG. 3.
FIG. 5 is an exploded view of a liquid cooling assembly according to some embodiments of the present application.
FIG. 6 is an exploded view of a liquid cooling assembly according to other some embodiments of the present application.
FIG. 7 is a view of a second plate of a liquid cooling assembly according to some embodiments of the present application.
FIG. 8 is a view of a second plate of a liquid cooling assembly according to some embodiments of the present application.
FIG. 9 is an exploded view of a main housing and a battery module according to some embodiments of the present application.
FIG. 10 is an exploded view of a main housing and a battery module according to other some embodiments of the present application.
FIG. 11 is a partially enlarged view at portion A in FIG. 2.

### List of reference signs:

1. Battery Module; 2. Liquid Cooling Assembly; 3. First Thermally Conductive Structure Adhesive; 4. Second Thermally Conductive Structure Adhesive; 5. Housing Assembly; 6. Pressing Strip; 7. First Adhesive Layer; 8. Second Adhesive Layer; 11. Battery; 111. Housing; 112. Pole; 21. First Plate; 22. Second Plate; 23. Third Plate; 24. First Cooling Flow Channel; 25. Second Cooling Flow Channel; 221. First Flow Channel Groove; 222. Second Flow Channel Groove; 223. First Protrusion; 224. Second Protrusion; 51. Main Housing; 52. Separation Beam; 53. Cover; 510. Module Chamber; 61. Material Reducing Chamber.

### DETAILED DESCRIPTION

In the description of the present application, unless otherwise expressly limited and defined, the terms "connected", "coupled", "fixed" are to be understood in a broad sense, for example, as a fixed connection, as a detachable connection, or as a whole, as a mechanical connection or an electrical connection, as a direct connection or indirect connection with an intermediate medium, or as an internal communication of the two elements or interaction of the two elements. The specific meaning of the above terms in the present application may be understood by one of ordinary skill in the art as the case may be.

In the present application, unless otherwise expressly limited and defined, the first feature above or under the second feature may include that the first feature directly contacts the second feature, or may include that indirect contact of the first and second features by additional features therebetween, unless expressly stated and defined otherwise. The first feature "above", "over" and "on" the second feature includes the first feature directly above and diagonally above the second feature, and the first feature has a higher height than the second feature. The first feature "below", "under" and "underneath" the second feature includes the first feature directly below and diagonally below the second feature, and the first feature has a lower height than the second feature.

In the description of some embodiments, the terms "up", "down", "left", "right", "front", "back", or other orientations or positional relationships are based on those shown in the accompanying drawings for the purpose of facilitating description and simplifying operation, and are not intended to indicate or imply that the device or element referred to must have a particular orientation, be constructed and operated in a particular orientation, and are therefore not to be construed as a limitation of the present application. Therefore, it is not to be construed as limiting the present application. In addition, the terms "first" and "second" are used to make a distinction in the description and have no special meaning.

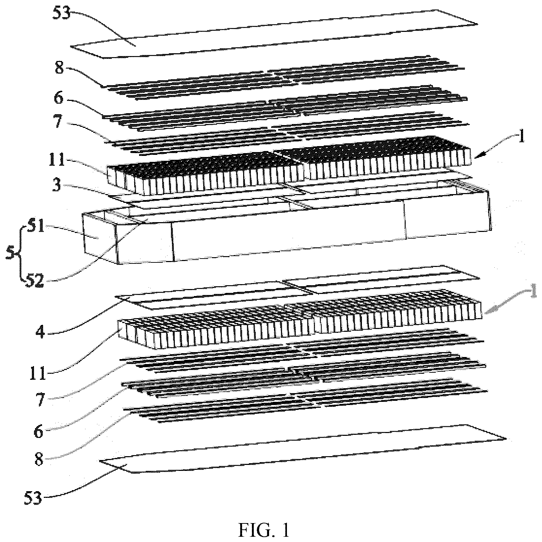

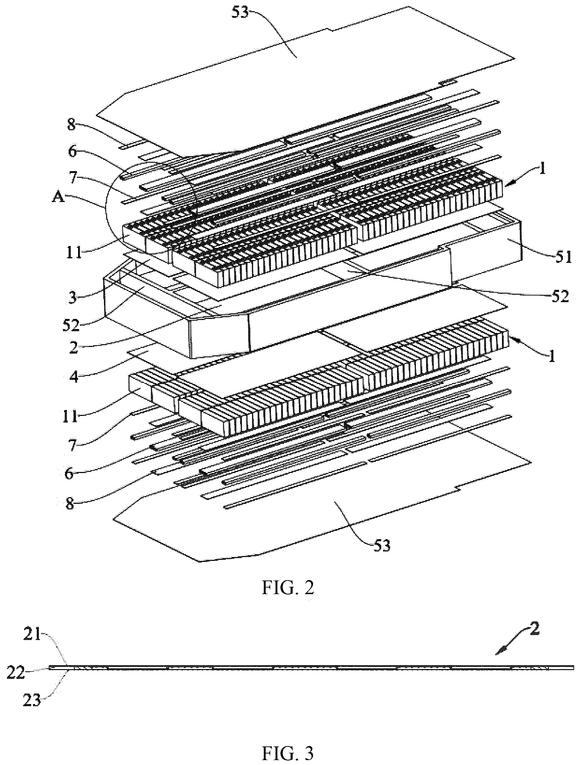

Some embodiments of the present application provide a battery pack, as shown in FIGS. 1 and 2. FIGS. 1 and 2 are an exploded view of the battery pack. The battery pack may reduce the size of the battery pack in a thickness direction thereof, improve the space utilization rate of the battery pack, improve the cooling effect of the battery modules 1 in a plurality of layers, prevent the battery modules 1 from being subject to a risk such as heat runaway and the like due to slower cooling, and prolong the service life of the battery pack.

The battery pack includes at least two layers of the battery modules 1, for example, two, three, four, and more layers of the battery modules 1. Each layer of the battery modules 1 includes one or more battery modules 1. In an embodiment, as shown in FIGS. 1 and 2, each layer of the battery modules 1 includes four battery modules 1 distributed in a 2×2 matrix, and each of the battery modules 1 includes a plurality of batteries 11. In another embodiment, the distribution of each layer of the battery module 1 may be set according to design requirements, and is not limited to the form of the 2×2 matrix, and it may include such as the form of the 2×3 matrix and the form of the 3×3 matrix.

A liquid cooling assembly 2 is disposed between two adjacent layers of the battery modules 1, and the liquid cooling assembly 2 is configured to dissipate heat commonly for the two adjacent layers of the battery modules 1 and commonly cool the two adjacent layers of the battery modules 1. Therefore, a bracket does not need to be disposed between the adjacent battery modules to support the battery modules 1, so that the size of the battery pack is in the thickness direction thereof, and the space utilization rate of the battery pack may be improved.

Referring to FIGS. 3, 4, and 5, the liquid cooling assembly 2 includes a first plate 21, a second plate 22, and a third plate 23 stacked in sequence. The second plate 22 is disposed between the first plate 21 and the third plate 23, and the first plate 21, the second plate 22, and the third plate 23 are integrally connected. A first cooling flow channel 24 is formed between the first plate 21 and the second plate 22, and a second cooling flow channel 25 is formed between the second plate 22 and the third plate 23. The first cooling flow channel 24 and the second cooling flow channel 25 are supplied herein with cooling liquid which is continuously circulated, to achieve cooling.

In the liquid cooling assembly 2 between the adjacent two layers of the battery modules 1, the first cooling flow channel 24 is defined between the first plate 21 and the second plate 22, and the second cooling flow channel 25 is defined between the second plate 22 and the third plate 23. Compared with a manner in which the adjacent two layers of the battery modules 1 are commonly cooled through one cooling flow channel therebetween, each of the first cooling flow channel 24 and the second cooling flow channel 25 is targeted to cool the battery module 1 in a corresponding one of the adjacent two layers, so that the cooling effect of the plurality of layers of the battery modules 1 may be effectively improved, and the batteries 11 in the battery module 1 may operate in an appropriate temperature environment, thereby preventing a risk such as the thermal runaway and the like of the battery modules 1 due to slower cooling, and prolonging the service life of the battery pack.

Illustratively, the first plate 21 and the second plate 22 are connected by welding, and the second plate 22 and the third plate 23 are connected by welding, thereby improving the stability and the sealability of the connection.

In some embodiments, the first cooling flow channel 24 and the second cooling flow channel 25 are in communication, and the liquid inlet of the cooling liquid is fixedly disposed at the first plate 21 for direct communication with the first cooling flow channel 24, or the liquid inlet of the cooling liquid is fixedly disposed at the third plate 23 for direct communication with the second cooling flow channel 25. A communication opening is disposed between the first cooling flow channel 24 and the second cooling flow channel 25. The communication opening is disposed at the second plate 22. The cooling liquid input through the liquid inlet may flow through the first cooling flow channel 24 and the second cooling flow channel 25. Therefore, the number of components of the battery pack may be reduced, the occupied space of the battery pack may be reduced, and the cost of the battery pack may be reduced, while cooling the battery modules 1 in the adjacent two layers.

In other embodiments, the first cooling flow channel 24 and the second cooling flow channel 25 may not be in communication. In this case, it is necessary to provide a liquid inlet for drawing in the cooling liquid and a liquid outlet for drawing out the cooling liquid at each of the first plate 21 and the third plate 23. The first cooling flow channel 24 and the second cooling flow channel 25 are independent of each other, and the internal cooling liquid is not communicated.

In some embodiments, a side surface of the first plate 21 away from the second plate 22 is a flat surface arranged to contact a layer of the battery module 1. A side surface of the third plate 23 away from the second plate 22 is a flat surface arranged to contact another layer of the battery module 1. By arranging a surface of the liquid cooling assembly 2 in contact with the battery module 1 as a flat surface, the relative stability between the battery module 1 and the liquid cooling assembly 2 inside the battery pack may be improved, and a sufficient contact area is disposed between the liquid cooling assembly 2 and the battery cell module 1, thereby improving the heat dissipation effect.

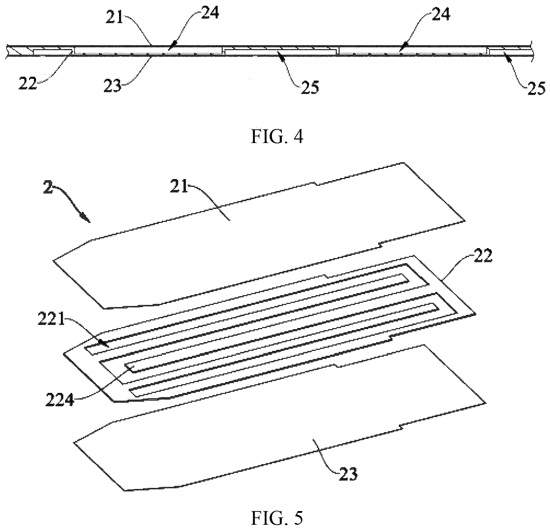

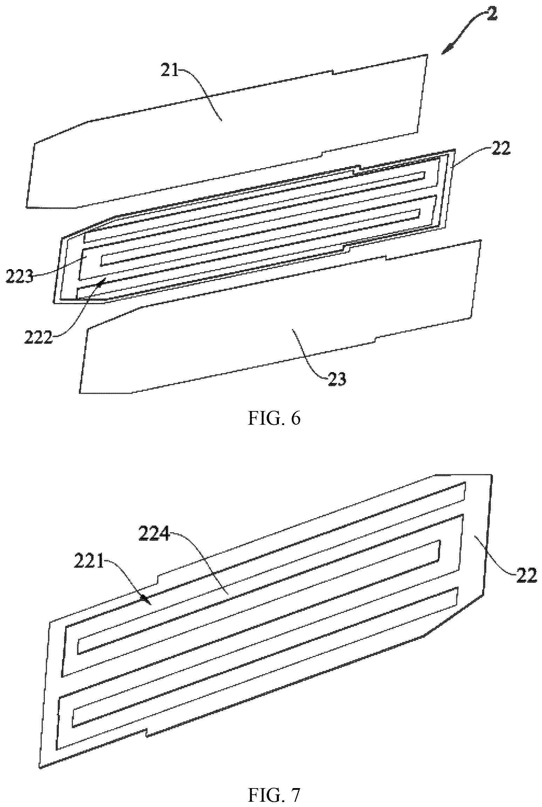

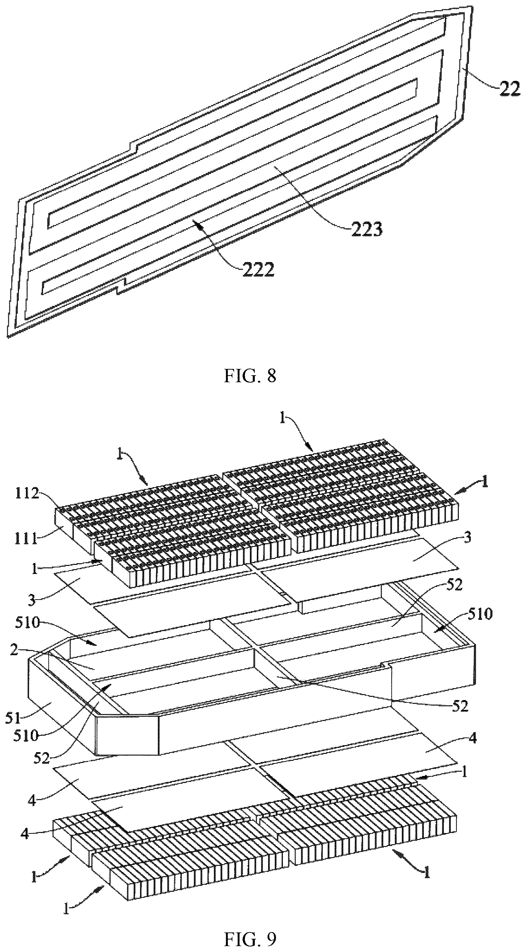

Specifically, in FIGS. 5 and 6 of the present embodiment, the first plate 21 and the third plate 23 are flat plates. In connection with FIGS. 7 and 8, a first flow channel groove 221 and a second flow channel groove 222 are disposed at opposite sides of the second plate 22, respectively. A first cooling flow channel 24 is formed by and surrounded by an inner wall of the first flow channel groove 221 and the first plate 21, and a second cooling flow channel 25 is formed by and surrounded by the second flow channel groove 222 and the third plate 23. Since the first plate 21 and the third plate 23 are flat plates, opposite side surfaces of the first plate 21 and the third plate 23 are flat surfaces, so that the first plate 21 and the third plate 23 are easily in contact with the battery module 1. In the liquid cooling assembly 2, the first flow channel groove 221 and the second flow channel groove 222 are disposed on the second plate 22, respectively, and each of the remaining two plates (the first plate 21 and the third plate 23) is disposed as a flat plate, to form the first cooling flow channel 24 and the second cooling flow channel 25, a processing process may be simplified, and the processing efficiency may be improved.

Referring to FIGS. 7 and 8, a first protrusion 223 and a second protrusion 224 are disposed on the opposite sides of the second plate 22, respectively. The first protrusion 223 and the second flow channel groove 222 are disposed on a same side of the second plate 22, and the second protrusion 224 and the first flow channel groove 221 are disposed on another same side of the second plate 22. The first flow channel groove 221 is formed and surrounded by a side of the first protrusion 223 away from the second flow channel groove 222, and the second flow channel groove 222 is formed and surrounded by a side of the second protrusion 224 away from the first flow channel groove 221. That is, a groove, that is, the first flow channel groove 221, is formed on the back surface of the first protrusion 223, while the second plate 22 is convex to form the first protrusion 223. A groove, that is, the second flow channel groove 222, is formed on the back surface of the second protrusion 224, while the second plate 22 is convex to form the second protrusion 224. Specifically, the second plate 22 in the present embodiment is integrally stamped, and the shape and size of the stamping mold match the shapes and the sizes of the first flow channel groove 221 and the second flow channel groove 222. The first flow channel groove 221, the second flow channel groove 222, the first protrusion 223, and the second protrusion 224 may be stamped in a same process, so that the process becomes simpler and more convenient.

It will be appreciated that the first protrusion 223 has a same shape as that of the first flow channel groove 221, and the second protrusion 224 has a same shape as that of the second flow channel groove 222. When the second protrusion 224 is formed, the second flow channel groove 222 may be formed on the back surface of the second protrusion 224, and when the first protrusion 223 is formed, the first flow channel groove 221 may be formed on the back surface of the second protrusion 224.

In some embodiments, at least one of the first cooling flow channel 24 or the second cooling flow channel 25 includes a snake-like shaped flow channel, so that the flow time during which the cooling liquid flows therein may be increased, and the cooling liquid is sufficiently contacted with the battery module 1, thereby improving the cooling effect for the battery module 1.

Referring to FIGS. 7 and 8, the first flow channel groove 221 extends in a snake-like shape, and correspondingly, the first protrusion 223 extends in a snake-like shape. The second protrusion 224 is disposed around the first flow channel groove 221, and the second flow channel groove 222 is disposed around the first protrusion 223.

In connection with FIGS. 4, 5, and 6, the first protrusion 223 is in contact with the third plate 23 in a sealed way and the second protrusion 224 is in contact with the first plate 21 in a sealed way, so that the cooling liquid in the first cooling flow channel 24 and the second cooling flow channel 25 flows in a set path.

In an alternative embodiment, the flow channels may be disposed on the first plate 21 and the third plate 23. In an embodiment, a surface of the first plate 21 facing the battery module 1 is a flat surface, a third flow channel groove is disposed on a surface of the first plate 21 facing the second plate 22, and a first cooling flow channel 24 is formed between and surrounded by the inner wall of the third flow channel groove and the second plate 22. A surface of the third plate 23 facing another battery module 1 is a flat surface, a fourth flow channel groove is disposed on a surface of the third plate 23 facing the second plate 22, and a second cooling flow channel 25 is formed between and surrounded by the inner wall of the fourth flow channel groove and the second plate 22. In some embodiments, the second plate 22 may be a flat plate and the opposite surfaces of the second plate 22 define the first cooling flow channel 24 and the second cooling flow channel 25 with the first plate 21 and the third plate 23, respectively. Alternatively, the second plate 22 may be a flow channel plate and a fifth flow channel groove and a sixth flow channel groove are disposed on opposite sides of the second plate 22, respectively. The inner wall of the third flow channel groove on the first plate 21 and the inner wall of the fifth flow channel groove on the second plate 22 together enclose and are used to form the first cooling flow channel 24, and the fourth flow channel groove on the third plate 23 and the sixth flow channel groove on the second plate 22 together enclose and are used to form the second cooling flow channel 25.

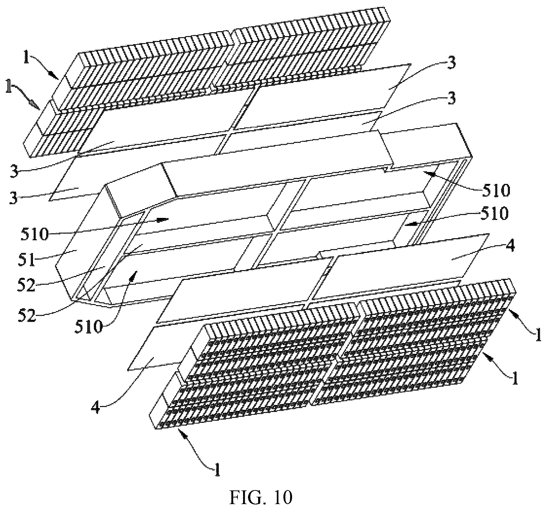

Referring to FIGS. 9 and 10, the battery 11 includes a housing 111 and a pole 112 disposed on the housing 111. In this embodiment, the battery modules 1 is disposed in two layers, and the two layers of the battery modules 1 are arranged mirror-symmetrically with respect to the liquid cooling assembly 2, and the poles 112 are located at a side of the housing 111 away from the liquid cooling assembly 2. Therefore, a surface of the housing 111 at which the pole 112 is not disposed is a flat surface and contact with the liquid cooling assembly 2, so that the contact area may be increased, the heat dissipation effect may be better, and the temperature consistency of the plurality of batteries 11 is advantageously maintained.

Illustratively, the battery modules 1 in the two layers are distributed in an upper layer and a lower layer. The battery module 1 in the upper layer is arranged with the poles 112 thereof facing upwardly, and the battery module 1 in the lower layer is arranged with the poles 112 thereof facing downwardly, so that the housing 111 of the battery 11 in the battery module 1 in the upper layer has a flat surface and contacts the first plate 21, and the housing 111 of the battery 11 in the battery module 1 in the lower layer has a flat surface and contacts the third plate 23.

In some embodiments, a first thermally conductive structure adhesive 3 is disposed between the first plate 21 and the battery module 1 in the upper layer. In some embodiments, the first plate 21 and the housing 111 of the battery 11 in the upper layer are adhered and fixed to each other by the first thermally conductive structure adhesive 3. A second thermally conductive structure adhesive 4 is disposed between the second plate 22 and the battery module 1. In some embodiments, the third plate 23 is adhered to the housing 111 of the battery 11 in the lower layer by the second thermally conductive structure adhesive 4. On the one hand, the fixing between the liquid cooling assembly 2 and the battery modules 1 in the upper and lower layers may be quickly realized by the first thermally conductive structure adhesive 3 and the second thermally conductive structure adhesive 4, and the firmness degree of the fixing may be higher. On the other hand, the first thermally conductive structure adhesive 3 and the second thermally conductive structure adhesive 4 have good thermally conductive properties, so that the heat exchange efficiency between the liquid cooling assembly 2 and the upper and lower layers of the battery modules 1 may be improved, and the cooling effect may be improved.

Illustratively, both the first thermally conductive structure adhesive 3 and the second thermally conductive structure adhesive 4 are two-component polyurethane thermally conductive structure adhesives having the higher strength, the higher bonding firmness, and the excellent thermal conductivity.

Referring to FIGS. 1, 2, 9, and 10, the battery pack further includes a housing assembly 5 including a main housing 51 and a separation beam 52. The main housing 51 has a cavity, and the liquid cooling assembly 2 is connected to the inner wall of the main housing 51. In some embodiments, the liquid cooling assembly 2 may be fixedly connected to the main housing 51 by welding, riveting or bolting. The liquid cooling assembly 2 divides the cavity into an upper receiving chamber and a lower receiving chamber. Each layer of battery modules 1 is disposed in each of the upper receiving chamber and the lower receiving chamber. That is, the upper and lower layers of the battery modules 1 are respectively disposed in the upper and lower receiving chambers. In some embodiments, one or more separation beams 52 are disposed in each of the upper receiving chamber and the lower receiving chamber and configured to divide each of the upper receiving chamber and the lower receiving chamber into a plurality of module chambers 510. A single layer of the battery module 1 includes a plurality of battery modules 1 placed one-to-one within the plurality of module chambers 510. The separation beam 52 is arranged to separate the battery modules 1 from each other, to prevent a short circuit between the two battery modules 1, and to perform a better isolation function when one of the battery modules 1 is thermally runaway to prevent the thermally runaway spreading into the other battery modules 1. In addition, the separation beam 52 may limit the position of the battery module 1 to ensure stability and safety of the battery 11 in the battery pack.

In this embodiment, the separation beam 52 is an expansion beam in the battery field. The expansion beam is secured to the main housing 51 by welding, riveting, or bolting.

Illustratively, referring to FIGS. 9 and 10, four separation beams 52 are disposed in each of the upper receiving chamber and the lower receiving chamber, and are disposed in a "±̅"-shaped to divide each of the upper receiving chamber and the lower receiving chamber into the four module chambers 510. Each layer of the battery module 1 includes four battery modules 1 placed respectively within four module chambers 510.

Accordingly, the four first thermally conductive structure adhesives 3 are disposed at the upper layer, and each of the battery modules 1 of the upper layer is bonded to a corresponding one of the module chambers 510 by a corresponding one of the first thermal conductive structure adhesives 3. The four second thermally conductive structural adhesives 4 are disposed at the lower layer, and each of the battery modules 1 of the lower layer is bonded to a corresponding one of the module chambers 510 by a corresponding one of the second thermally conductive structural adhesives 4.

Referring to FIGS. 1 and 2, the housing assembly 5 further includes two covers 53, and each of the two covers 53 is removably snapped onto the opening of a corresponding one of the two receiving chambers. When the two layers of the battery modules are arranged respectively in the upper and lower layers, the two covers 53 are used as an upper cover and a bottom plate, respectively.

With continued reference to FIGS. 1 and 2, the battery pack further includes a pressing strip 6 configured to fasten and fix the battery 11 within the module chamber 510. In some embodiments, opposite ends of the pressing strip 6 are connected to the main housing 51, and the pressing strip 6 is pressed against a side of the housing 111 of the battery 11 away from the bottom wall of the module chamber 510. After the battery module 1 is placed inside the module chamber 510, the opposite ends of the pressing strip 6 are connected to the main housing 51, so that the battery module 1 is fastened inside the module chamber 510, thereby preventing the battery module 1 from moving within the main housing. The pressing strip 6 is higher than the poles 112 disposed at the housing 111, and the cover 53 is pressed against the pressing strip 6 after being snapped to the main housing 51 without being pressed against the poles 112, so that the stability of the pressing strip 6 may be improved, thereby improving the stability and safety of the battery 11 in the battery pack.

In some embodiments, the two ends of the pressing strip 6 are welded, riveted, threaded, or the like with the main housing 51, as long as a secure connection between the pressing strip 6 and the main housing 51 may be achieved.

In some embodiments, the opposite ends of the pressing strip 6 may be attached to the separation beam 52 disposed within the main housing 51, or the opposite ends of the pressing strip 6 may be attached onto the inner wall of the main housing 51.

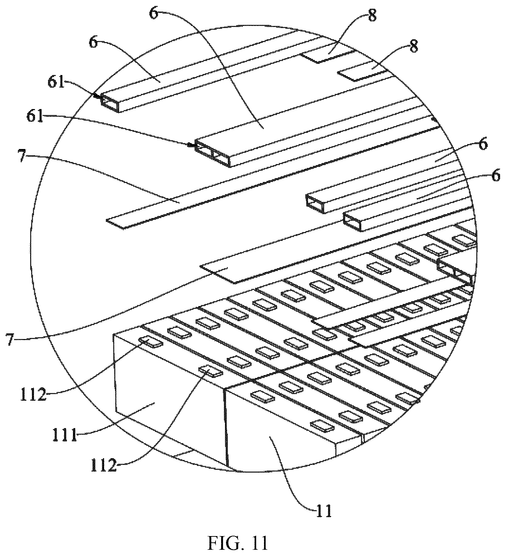

Referring to FIG. 11, opposite ends of the housing of the battery 11 are pressed and fixed by the pressing strip 6, so that the force received by the battery 11 is balanced, and the stability and safety of the battery 11 in the battery pack are ensured.

In some embodiments, the cover 53 and the main housing 51 are threadedly-connected by fasteners such as screws, bolts, or the like to ensure that the secure connection between the cover 53 and the main housing 51 without being not loosened, and that the cover 53 is conveniently removed for maintenance when a failure occurs in the interior of the battery pack.

In some embodiments, referring to FIG. 11, a material reducing chamber 61 is disposed on the pressing strip 6 to ensure the strength and the rigidity of the battery pack while reducing material consumption and cost thereof.

Illustratively, each battery module 1 includes two columns of batteries 11 With reference to FIG. 11, three pressing strips 6 are disposed corresponding to the two columns of batteries 11, and includes two side pressing strips and one intermediate pressing strip. Each side pressing strip is disposed at shoulder of a corresponding one of the two columns of batteries 11 away from each other, and the intermediate pressing strip is simultaneously pressed against shoulders of the two columns of cells 11 close to each other. The side pressing strip is disposed with a material reducing chamber 61, the width of the intermediate pressing strip is greater than the width of the side pressing strip, and two material reducing chambers 61 are disposed respectively at the side pressing strip separated by a separating strip.

In some embodiments, a first adhesive layer 7 is sandwiched between the pressing strip 6 and the housing 111. A second adhesive layer 8 is sandwiched between the pressing strip 6 and the cover 53. The bonding between the pressing strip 6 and the cover 53 and the bonding between the housing 111 of the battery 11 is achieved by the first adhesive layer 7 and the second adhesive layer 8, so that the assembly efficiency of the battery pack is increased, and the production speed of the battery pack may be improved.

For example, the first adhesive layer 7 and the second adhesive layer 8 include the polyurethane structural adhesive.

Illustratively, the pressing strip 6 may be made of an insulating material, such as a plastic or the like, and has a better insulating effect. Alternatively, the pressing strip 6 may include a metal strip and an insulating film disposed at opposite sides of the metal strip, so that the pressing strip 6 may perform an insulating function while having high strength.

In the present embodiment, the cover 53, the pressing strip 6, the battery module 1, and the liquid cooling assembly 2 are bonded and linked in sequence, so that the battery pack is formed as a whole, the assembly efficiency of the battery pack is increased, and the rigidity of the whole battery pack is increased. Moreover, since the bracket disposed to support the battery module 1 is removed, the liquid cooling assembly 2 simultaneously lowers the temperature of the upper and lower battery modules 1, thereby simplifying the structure of the whole battery pack, improving the space utilization rate of the whole battery pack, increasing the electric capacity and the life range of the whole battery pack.

## Claims

1. A battery pack, **characterized in that** the battery pack includes:
at least two layers of battery modules (1); and
a liquid cooling assembly (2), disposed between adjacent two ones of the at least two layers of the battery modules (1) and including a first plate (21), a second plate (22), and a third plate (23), wherein the second plate (22) is located between the first plate (21) and the third plate (23), a first cooling flow channel (24) is formed between the first plate (21) and the second plate (22), a second cooling flow channel (25) is formed between the second plate (22) and the third plate (23),
wherein the first cooling flow channel (24) and the second cooling flow channel (25) are in or not in communication.

2. The battery pack according to claim 1, **characterized in that** at least one of a side surface of the first plate (21) away from the second plate (22) or a side surface of the third plate (23) away from the second plate (22) is flat.

3. The battery pack according to claim 2, **characterized in that** the first plate (21) and the third plate (23) are flat plates, a first flow channel groove (221) and a second flow channel groove (222) is disposed at opposite sides of the second plate (22), respectively, a first cooling flow channel (24) is surrounded by an inner wall of the first flow channel groove (221) and the first plate (21), and a second cooling flow channel (25) is surrounded by the second flow channel groove (222) and the third plate (23).

4. The battery pack according to claim 3, **characterized in that** a first protrusion (223) and a second protrusion (224) are disposed at the opposite sides of the second plate (22), respectively, the first protrusion (223) and the second flow channel groove (222) are disposed at a same side of the second plate (22), and the second protrusion (224) and the first flow channel groove (221) are disposed on another same side of the second plate (22); and
the first flow channel groove (221) is surrounded by a side of the first protrusion (223) away from the second flow channel groove (222), and the second flow channel groove (222) is surrounded by a side of the second protrusion (224) away from the first flow channel groove (221).

5. The battery pack according to claim 4, **characterized in that** the first protrusion (223) is in contact with the third plate (23) in a sealed way and the second protrusion (224) is in contact with the first plate (21) in the sealed way.

6. The battery pack according to claim 2, **characterized in that** a third flow channel groove is disposed on a surface of the first plate (21) facing the second plate (22), and the first cooling flow channel (24) is surrounded by an inner wall of the third flow channel groove and the second plate (22); and/or
a fourth flow channel groove is disposed on a surface of the third plate (23) facing the second plate (22), and the second cooling flow channel (25) is surrounded by an inner wall of the fourth flow channel groove and the second plate (22).

7. The battery pack according to claim 1, **characterized in that** at least one of the first cooling flow channel (24) or the second cooling flow channel (25) includes a snake-like shaped flow channel.

8. The battery pack according to any one of claims 1 to 7, **characterized in that** a first thermally conductive structure adhesive (3) is disposed between the first plate (21) and the battery module (1); and/or a second thermally conductive structure adhesive (4) is disposed between the second plate (22) and the battery module (1).

9. The battery pack according to claim 8, **characterized in that** each of the first thermally conductive structure adhesive (3) and the second thermally conductive structure adhesive (4) include a two-component polyurethane thermally conductive structure adhesive.

10. A battery pack according to any one of claims 1 to 7, **characterized in that** the battery modules (1) are arranged in two layers, the two layers of the battery modules (1) are arranged mirror-symmetrically with respect to the liquid cooling assembly (2), each of the battery modules (1) includes a plurality of batteries (11), and each of the batteries (11) includes a housing (111) and a pole (112) at a side of the housing (111) away from the liquid cooling assembly (2).

11. The battery pack according to claim 10, **characterized in that** the battery pack further includes a housing assembly (5) including a main housing (51) and one or more separation beams (52);
the main housing (51) has a cavity, and the liquid cooling assembly (2) is connected to an inner wall of the main housing (51), the liquid cooling assembly (2) divides the cavity into two receiving chambers, and each layer of the battery modules (1) is placed in each of the receiving chambers; and
the one or more separation beams (52) are disposed in each of the receiving chambers, the separation beams (52) divide each of the receiving chambers into a plurality of module chambers, and each layer of the battery modules (1) includes a plurality of battery modules (1) placed one-to-one within the plurality of module chambers (510).

12. The battery pack according to claim 11, **characterized in that** the housing assembly (5) further includes two covers (53), and each of the two covers (53) is removably snapped onto an opening of a corresponding one of the two receiving chambers;
the battery pack further includes a pressing strip (6), opposite ends of the pressing strip (6) are connected to the main housing (51), and opposite ends of the pressing strip (6) are connected to the main housing (51), and the pressing strip (6) is pressed against a side of the housing (111) away from a bottom wall of the module chamber (510), the pressing strip (6) is higher than the pole (112), and the cover (53) is pressed against the pressing strip (6).

13. The battery pack according to claim 12, **characterized in that** a material reducing chamber (61) is disposed at the pressing strip (6).

14. The battery pack according to claim 12, **characterized in that** a first adhesive layer (7) is sandwiched between the pressing strip (6) and the housing (111), and a second adhesive layer (8) is sandwiched between the pressing strip (6) and the cover (53).

15. The battery pack according to claim 12, **characterized in that** the cover (53), the pressing strip (6), the battery module (1), and the liquid cooling assembly (2) are bonded and linked in sequence.
